# EUROPÄISCHE PATENTSCHRIFT

(11) **EP 3 059 412 B1**
(45) Veröffentlichungstag und Bekanntmachung des Hinweises auf die Patenterteilung: **31.05.2017**
(21) Anmeldenummer: 16000216.8
(22) Anmeldetag: 29.01.2016
(51) Int. Cl.: F02B 75/04

(54) **HYDRAULISCH LÄNGENVERSTELLBARE PLEUELSTANGE**
HYDRAULICALLY LENGTH ADJUSTABLE CONNECTING ROD
TIGE DE BIELLE REGLABLE EN LONGUEUR HYDRAULIQUEMENT

(30) Priorität: 29.01.2015 DE 102015001066
(43) Veröffentlichungstag der Anmeldung: 24.08.2016
(73) Patentinhaber: Ingenieurbüro Brunner GmbH, 6900 Bregenz (AT)
(72) Erfinder: Brunner, Armin, 87616 Marktoberdorf (DE)
(74) Vertreter: Riebling, Peter

(56) Entgegenhaltungen:
- WO-A1-2013/092364
- DE-A1- 4 226 361
- DE-A1-102012 112 434
- DE-C- 100 489
- FR-A- 348 989
- GB-A- 2 161 580
- US-A- 4 370 901

## Beschreibung

Die Erfindung hat das Ziel, die Verdichtung des Ottomotors oder Dieselmotors variabel zu machen, um insbesondere den Nachteil des Ottomotors auszugleichen, bei unterschiedlichen Betriebszuständen eine unterschiedliche Verdichtung zu haben. Zum Stand der Technik sind verschiedene Ausführungen bekannt, die zum Ziel haben, diesem Nachteil mit einer variablen Pleuelstange zu begegnen, wie z. B. die Patentanmeldungen Nr.: AT 514 071 A4 oder DE 10 2012 020 999 A1, um zwei der Ausführungen zu nennen.

Mit den im Patentanspruch 1 angeführten Merkmalen der Erfindung kann der Motor-Hubkolben in seiner Stellung verändert und damit die Verdichtung bei fast allen Betriebsverhältnissen auf dem Höchstmaß gehalten werden, was den Wirkungsgrad des Motors verbessert und damit den spezifischen Kraftstoffverbrauch verringert. In den Unteransprüchen sind verschiedene Möglichkeiten der Steuerung der Längenverstellung der Pleuelstange angeführt.

Nach einem wesentlichen Merkmal der Erfindung ist gemäß der technischen Lehre des Anspruches 1 eine hydraulisch längenverstellbare Pleuelstange, insbesondere für Ottomotoren dergestalt ausgebildet, dass diese aus zwei zueinander durch mindestens einen Kolben mit zugeordneter Zylinderkammer in deren Längsachse verschiebbar gemachten Hauptteilen besteht, wobei im Zylinderraum dieses Kolbens beidseitig mindestens je eine Kammer ausgebildet ist, die durch wenigstens einen Ölzulaufkanal über die Kurbelwelle mit dem Schmierölkreislauf des Motors verbunden ist.

Die Kammern sind gegen das Rücklaufen von Öl in den Schmierölkreislauf abgesichert, vorzugsweise durch Rückschlagventile , wobei im Unterteil der Pleuelstange wenigstens ein Bolzen gelagert ist, an dem wenigstens eine Öffnung oder/und Freistellung so ausgebildet und platziert ist, dass seine Bewegung in eine andere Position das Herausdrücken von Öl aus der jeweilig dadurch geöffneten Kammer ermöglicht, wobei die Austrittsstellen des Öls aus den Kammern so lagebestimmt sind, dass die durch das Abströmen von Öl bedingte Bewegung des Oberteils der Pleuelstange zu zunehmendem Überdecken und dann Verschließen der jeweiligen Austrittsstelle des Öls führt und dadurch das Abströmen von Öl wieder unterbrochen wird.

Vorteil der technischen Lehre des Anspruches 1 ist demnach, dass der Ölkreislauf des Hubkolbenmotors für die Längenverstellung der Pleuelstange genutzt wird.

Vorteilhaft bei der Erfindung ist, dass durch die Bewegung des Oberteils eine Steuerung der Pleuelstange in der Art erfolgt, dass ein stufenlos regelbares Öffnen und Verschließen der Olablaufstellen der jeweiligen Zylinderkammer erfolgt, was eine stufenlose Höhenverstellung des Motorkolbens auf eine unkomplizierte Weise erlaubt und sich damit entscheidend von dem Stand der Technik unterscheidet.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Soweit einzelne Gegenstände als "erfindungswesentlich" oder "wichtig" bezeichnet sind, bedeutet dies nicht, dass diese Gegenstände notwendigerweise den Gegenstand eines unabhängigen Anspruches bilden müssen. Dies wird allein durch die jeweils geltende Fassung des unabhängigen Patentanspruches bestimmt.

Im Folgenden wird die Erfindung anhand von mehreren Ausführungswegen darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Längsschnitt durch eine Pleuelstange mit Darstellung der Kurbelwellenwangen im unteren Teil der Zeichnung in einer ersten Betriebsstellung
- Figur 2:: eine vergrößerte Darstellung sowie abgewandelte Ausführungsform nach Figur 1
- Figur 3:: eine weitere abgewandelte Ausführungsform nach Figur 1
- Figur 4:: eine weitere abgewandelte Ausführungsform nach Figur 1

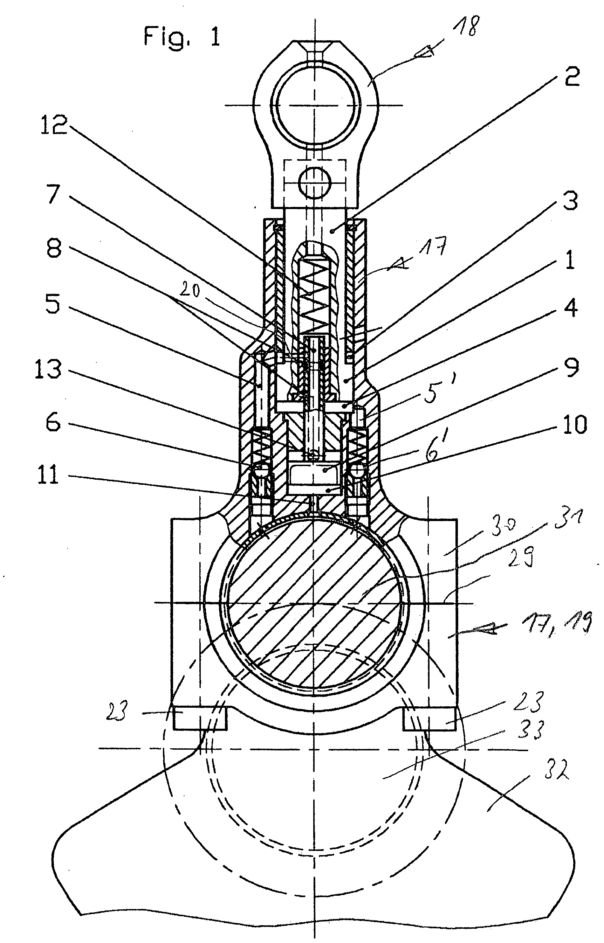

Figur 1 zeigt ein Ausführungsbeispiel der Erfindung mit der Pleuelstange und der Kurbelwelle 33, wobei die Pleuelstange aus zwei zueinander in der Länge verschiebbaren Hauptteilen besteht, dem Oberteil 18 mit dem Kolbenbolzenlager und dem Unterteil mit dem Pleuellager. Innerhalb der Pleuelstange befindet sich ein Kolben 1 mit dazugehöriger Kolbenstange 2. Durch den gewählten Hub dieses Kolbens bildet sich oberhalb und unterhalb des Kolbens 1 jeweils eine Kammer 3, 4 aus, die durch Ölkanäle 5, 5' mit Rückschlagventilen 6, 6' über eine umlaufende Nut in den Lagerschalen des Kurbelzapfens 31 mit dem Schmierölkreislauf des Motors verbunden sind.

Innerhalb des Kolbens 1 geführt befindet sich das Steuerungsteil, beispielsweise ein Stift mit Freistellungen oder ein Hohlbolzen 7 mit einer oder zwei seitlichen Öffnungen 8, der einen kleinen Kolben 9 hat.

Die unterhalb dieses Kolbens ausgebildete Kammer 10 ist durch einen Ölkanal 11 ebenfalls mit dem Schmierölkreislauf des Motors verbunden. Dieser muss nun - evtl. statt seines Überdruckventils - einen steuerbaren Druckregler haben, der z.B. zwischen 3 und 8 bar regelbar sein könnte.

Verändert man nun diesen Druck, so verschiebt sich der Hohlbolzen 7 nach oben oder nach unten, je nachdem der Druck auf seinen Kolben 9 oder der Gegendruck der Feder 12 größer ist. Dieses Verschieben bewirkt, dass eine seiner beiden seitlichen Bohrungen 8 nicht mehr durch den Kolben 1 überdeckt ist, dieser kann sich nun gerade soweit bewegen bis er die Bohrung überläuft, drückt dabei das Öl aus der Kammer in den Hohlbolzen 7 wo es durch eine Bohrung 13 in das Kurbelgehäuse ablaufen kann. Gleichzeitig füllt sich die Gegenkammer durch den sich bildenden Unterdruck wieder mit Öl auf.

Mit der Bewegung des Kolbens 1 bewegt sich das ganze Oberteil 1 8 der Pleuelstange und damit der eigentliche Hubkolben des Motors.

Damit wird eine stufenlose Höhenverstellung des Motorkolbens über die Regulierung des Schmieröldrucks möglich.

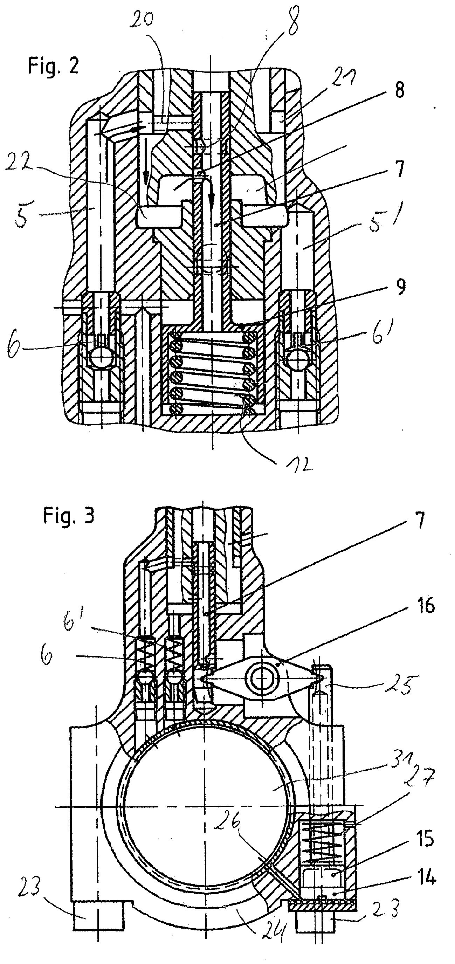

Fig. 2 zeigt in vergrößertem Maßstab und etwas verändert den Ölfluss, wenn sich der Hohlbolzen 7 etwas nach unten bewegt hat. Die Feder 12 ist im Kolben 9 so eingebaut, dass bei einem Bruch oder Setzung derselben der Hohlbolzen 7 in die richtige Richtung - nach unten - verschoben wird.

Die dargestellte Ausführung scheint für die Erfindung die günstigste zu sein, kann aber auch abgewandelt werden. Es könnten z.B. auch zwei Kolben mit etwas kleinerem Durchmesser parallel nebeneinander angeordnet werden, was den Vorteil insgesamt größerer Kolbenfläche und geringerer Breite des Unterteils 17 hätte.

Der Hohlbolzen 7 könnte nur drehbar ausgeführt sein, z.B. indem er durch ein Gewinde mit großer Steigung mit seinem dann längsgeführten Kolben 9 verbunden ist, oder es kommt ein Drehkolben zur Anwendung. Der Hohlbolzen 7 muss dann oben eine schraubenförmige Nut für den Ölabfluss haben. Seine Drehung bewirkt dann dasselbe wie die vorher beschriebene Längsverschiebung.

Man könnte auch nur mit einem Ölzulaufkanal 5, 5' auskommen der mit den beiden Kammern 3, 4 verbunden ist, eines der Rückschlagventile 6, 6' muss dann zwischen den Abzweigungen zu den Kammern 3, 4 sein; oder es wird nur die untere Kammer 4 angefahren und ein Ölzulaufkanal 6, 6' im dann verlängerten Kolben 1 - mit Rückschlagventil - verbindet die beiden Kammern 3, 4.

Eine weitere Möglichkeit wäre das Rückschlagventil 6, 6' zur oberen Kammer 3 wegzulassen, dafür die untere Lagerschale des Pleuellagers 19 mit einer weiteren Nut zu versehen und das Öl in einer Nut auf der Rückseite der oberen Lagerschale sowohl der Kammer 3 als auch der Kammer 10 zuzuführen. Vorteil: Die Öffnung der großen Kammer 4 kann dann nur bei wesentlich geringerem Druck in dieser Kammer 4 erfolgen. Nachteil: Es könnte Luft in die kleine Kammer 3 angesaugt werden.

Fig. 3 zeigt eine weitere Möglichkeit der Ansteuerung der Längenverstellung der Pleuelstange durch den Hohlbolzen 7. Die übliche M8 Schraube zur Befestigung der unteren Lagerschale ist auf einer Seite durch zwei M6 Schrauben ersetzt worden, sodass ein Kolben 15 mit Rückholfeder dazwischen Platz hat, dessen durch den veränderbaren Öldruck bewirkte Bewegung dann über das Teil 16 auf den Hohlbolzen übertragen wird. Vorteil: Die Massen von Teil 7 und15 könnten über den Drehpunkt von Teil 1 ausgeglichen gestaltet sein und die Rückholfeder ist sehr einfach auszubauen.

Der Kolben 15 könnte auch nur in der unteren Lagerschale 24 waagrecht eingebaut sein und dessen Bewegung mit einer in Teil 16 befestigten Stange übertragen werden, man hat dann zwar eine Übersetzung der Kräfte auf den Hohlbolzen 7 aber auch mehr Aufwand und Platzbedarf.

Eine rein mechanische Ansteuerung des Hohlbolzens 7 wäre auch möglich: In das Teil 16 ist eine Kolbenstange 25 eingeschraubt die schräg nach unten ins Kurbelgehäuse geht und dort in einer schwenkbar und höhenverstellbar gelagerten Hülse geführt ist. Der Hohlbolzen 7 hat nur eine Ölablaufbohrung und bewegt sich bei jeder Umdrehung der Kurbelwelle auf und ab. Wird der Drehpunkt der Hülse nach oben oder unten bewegt, verändert sich auch die Position des Hohlbolzens 7 und - über den Ablauf von Öl aus den Kammern 3 oder 4 - entsprechend das Oberteil 18 der Pleuelstange. Nachteil ist vor allem der größere Platzbedarf einer solchen Ausführung.

Der die Längenverstellung der Pleuelstange steuernde Bolzen 7 könnte auch quer zur Längsachse der Pleuelstange eingebaut sein. Dazu müsste der Kolben 1 eine stiftartige Verlängerung von etwa 8 bis 10 mm Durchmesser haben, die nach unten und durch den quer liegenden Steuerbolzen hindurchgeht, an dem sie in einem Schlitz geführt ist.

Der Stift ist im Bereich dieser Führung auf etwa 5 mm beidseitig abgeflacht und hat 2 Bohrungen als Ölkanäle, die zu den Zylinderkammern 3, 4 gehen, unten verschlossen sind und seitliche Austrittsbohrungen im Bereich des Steuerbolzens haben, durch den sie normalerweise verdeckt sind. Der Steuerbolzen hat seitlich einen schrägen Schlitz der zwischen den beiden Austrittsbohrungen angeordnet ist und eine Ablaufmöglichkeit für das Öl hat.

Bewegt sich nun der Steuerbolzen durch veränderten Schmieröldruck, so kommt der schräge Schlitz in den Bereich einer der seitlichen Bohrungen und Öl kann nun aus einer der Zylinderkammern 3 oder 4 so lange herausgedrückt werden, bis die dadurch bewirkte Bewegung des Oberteils 18 die Ablaufbohrung wieder aus dem Bereich des Schlitzes verschiebt, was dem gleichen Vorgang entspricht, wie bei der vertikalen Anordnung des Hohlbolzens 7.

Vorteil einer solchen Ausführung wäre, dass der Weg des Steuerbolzens größer als der dadurch eingeleitete Weg des Oberteils 18 sein könnte. Der Durchmesser des Motorzylinders setzt hier jedoch bauliche Grenzen.

Ein quer liegender Steuerbolzen könnte auch oberhalb des Kolbens 1 oder im Bereich eines dann etwas verlängerten Kolbens 1 in ganz ähnlicher Weise wie vorher beschrieben eingebaut sein, nur wird der Führungsschlitz dann besser in der Kolbenstange 2 bzw. im Kolben 1 sein und der Steuerbolzen in diesem Bereich der Breite des Führungsschlitzes angepasst sein.

Bei der Anordnung des Steuerbolzens 7 nach Figur 1 bis 4 könnte dieser auch etwas seitlich versetzt werden, möglicherweise auch bis an den Rand des Kolbens 1 um eine einfache Sicherung des Motor-Hubkolbens gegen Verdrehung zu erreichen - falls sich diese als notwendig erweisen sollte.

Die verschiedenen dargelegten Ausführungsbeispiele entsprechen den in den Patentansprüchen angegebenen Merkmalen.

Bei hohen Drehzahlen könnte es sich ergeben, dass die Fliehkräfte des Schmieröls an den Austrittsstellen der Kurbelzapfen einen erhöhten Druck erzeugen, der sich bis zu einer unerwünschten Bewegung des Steuerbolzens 7 auswirkt. Da aber an der jeweiligen Eintrittsbohrung des Öls am Wellenzapfen die Fliehkräfte des Öls in die Gegenrichtung wirken, könnte man die Bohrung vom Öleintritt bis Mitte Kurbelwelle entsprechend größer halten als von der Mitte zum Ölaustritt am Kurbelzapfen 31. Sind die unterschiedlichen Volumenmassen des Öls in den Bohrungen im richtigen Verhältnis zu ihren unterschiedlichen Fliehkraftradien, so sind die Fliehkräfte immer im Ausgleich und der Steuerbolzen 7 wird nur durch die Öldrucksteuerung beeinflusst.

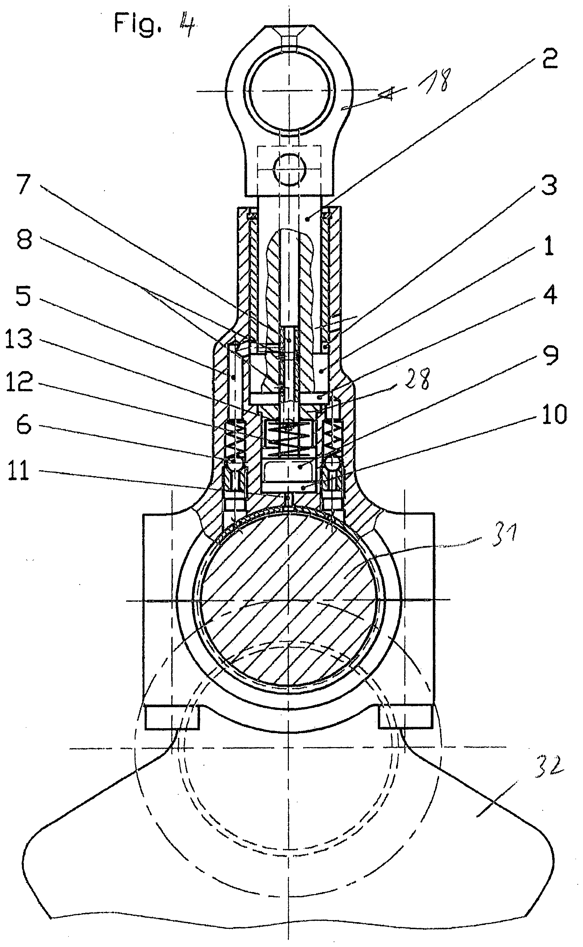

Figur 4: Während die Figur 1 zeigt, dass die Feder 12 sich mit dem einen Ende auf der Kolbenstange 2 abstützt, während das andere Ende auf dem Bolzen 7 aufsitzt, zeigt die Figur 4 als abgewandeltes Ausführungsbeispiel, dass die Feder weiter unten eingebaut ist, so dass sich das eine Federende an der Oberseite des kleinen Kolbens 9 abdrückt und das andere Ende an einem gehäusefesten Ring 28 anlegt.

Der Vorteil der Maßnahme des Einbaus der Feder 12 nach Figur 4 ist, dass eine verbesserte stufenlose Verstellbarkeit des Oberteils 18 gewährleistet ist.

In den dargestellten Figuren 1 und 4 ist allgemein angegeben, dass die gesamte Pleuelstangenanordnung aus einem Unterteil 17 besteht, in dem ein stufenlos höheneinstellbares Oberteil 18 geführt ist in welchem der Motor-Hubkolben durch den Kolbenbolzen befestigt ist, wobei lediglich dessen Aufnahmebohrung dargestellt ist.

An dem gehäuseförmigen Unterteil 17 sind Befestigungsschrauben 23 angeordnet, welche die Lagerschale 24 im Hinblick auf eine Trennfuge 29 mit dem feststehenden Teil 30 des Unterteils 17 verbinden.

Ferner zeigen die Figuren 1 und 4 einen Schnitt durch den Kurbelzapfen 31, in dem das Pleuellager 19 drehbar aufgenommen ist, weiters ist die Kurbelwelle 33 mit ihren angeformten Kurbelwellenwangen 32 dargestellt.

In der obenstehenden Beschreibung ist auch die Anordnung des jeweiligen Ölzulaufkanals 5 angegeben, wobei der besseren Verdeutlichung wegen in Figur 1 und Figur 4 der linke Ölzulaufkanal mit dem Bezugszeichen 5 und der auf der rechten Seite befindliche Ölzulaufkanal mit dem Bezugszeichen 5' versehen ist.

Dies gilt im Übrigen auch für die Figur 4, wo der zeichnerischen Vereinfachung wegen das Bezugszeichen 5' nicht mehr eingetragen ist.

Der obere Auslauf des Ölzulaufkanals 5 mündet in die obere Kammer 3 ein.

Im Bereich des Schafts der Kolbenstange 2 ist eine Querbohrung 20 angeordnet, die ausgehend von der Kammer 3 einen Ölzulauf in Richtung auf den Bolzen 7 ermöglicht.

In Figur 2 sind die Teile wie in Figur 1 in vergrößerter Darstellung gezeichnet, sowie teilweise in abgewandelter Ausführungsform. Dort ist auch deutlicher erkennbar, dass die Querbohrung 20 in die Zylinderbohrung des Bolzens 7 einmündet.

Am Hohlbolzen 7 sind zwei seitliche und vertikal übereinanderliegende Bohrungen 8 vorhanden, die später auch als Austrittsstellen bezeichnet werden und die einen Zugang des Ölflusses von der Querbohrung 20 in den Innenraum des Hohlbolzens 7 ermöglichen. Die obere Ringkammer 3, 21 ist flüssigkeitsleitend mit der Querbohrung 20 verbunden. Ein Ölabfluss aus der oberen Ringkammer 3, 21 ergibt sich dann, wenn sich die entsprechende seitliche Bohrung 8 mit ihrer als Ringnut ausgebildeten Freistellung in Gegenüberstellung zur Mündung der Querbohrung 20 befindet.

Wird der Bolzen 7 nach unten verschoben, dann kommt die untere seitliche Bohrung 8 in Gegenüberstellung zu der unteren Ringkammer 4, 22.

Die Figur 3 zeigt zur weiteren Erläuterung der oben genannten Beschreibung noch folgende weitere Teile:
Es ist angegeben, dass statt zweier Rückschlagventile 6, 6', die auf der jeweils gegenüberliegenden Seite zu einer Längsmittenachse gemäß Figur 1, 2 und 4 liegen, nunmehr nach Figur 3 die beiden Rückschlagventile 6, 6' zueinander benachbart auf der gleichen Seite angeordnet sein können.

Es gibt noch einen Unterschied zwischen der Figur 1 und Figur 2 dergestalt, dass die Feder 12 in Figur 2 den gesamten Bolzen 7 in Federvorspannrichtung nach oben presst, während bei der Ausführungsform nach Figur 1 die Feder 12 den Bolzen 7 nach unten vorspannt.

In einer anderen nicht näher dargestellten Ausführungsform kann es auch vorgesehen sein, dass statt der Bewegung des Bolzens 7 mit entweder einer unteren oder einer oberen Feder 12 stattdessen auch zwei oder mehr Federn oben und unten angeordnet sein können.

In einer anderen, nicht dargestellten Ausführungsform kann es im Übrigen auch vorgesehen sein, dass der Hubantrieb des Bolzens 7 in beide Richtungen durch Schmieröldruck erfolgt, wobei dann die Feder 12 entfällt.

Die in der Zeichnung dargestellten metallischen Schraubenfedern können auch als andersartige Kraftspeicher ausgebildet sind, wie z. B. Elastomerfedern, Tellerfedern oder andere Kraftspeicherelemente.

Das Steuerprinzip für die Ansteuerung des Bolzens 7 ist in Figur 3 in veränderter Weise im Vergleich zu den Figuren 1, 2 und 4 dargestellt.

Ergänzend zu der oben bestehenden Beschreibung wird noch darauf hingewiesen, dass der Kolben 15 eine Kolbenstange 25 aufweist, deren oberes freies Ende sich an dem schwenkbaren Teil 16 abstützt, welches als Schwenkklinke ausgebildet ist. Der Lagerpunkt oder Schwenkpunkt des Teils 16 ist am Unterteil 17 angeordnet, wobei das gegenüberliegende Teil der Schwenkklinke im Eingriff mit dem Bolzen 7, um diesen oszillierend zu bewegen.

Über die Querbohrung 26, die vom Kurbelzapfen 31 ausgeht, und das Schmieröl vom Kurbelzapfen 31 aufnimmt, wird das Drucköl in die Zylinderkammer 14 eingeleitet und eine am Schaftkolben 15 angeordnete Rückholfeder 27 hält diesen in einer entsprechenden Position nach Figur 3.

Nachfolgend werden die Merkmale der Erfindung in zusammen gefasster Form dargestellt:
1. Hydraulisch längenverstellbare Pleuelstange
2. Beim Ottomotor erfolgt die Leistungsregelung auch durch die Drosselung der Luftzufuhr und damit teilweise zu niedrigen Verdichtungsdrücken, die seinen Wirkungsgrad verschlechtern. Mit einer längenverstellbaren Pleuelstangen kann der Verdichtungsdruck geregelt und damit der Wirkungsgrad des Motors verbessert werden.
3. Die Pleuelstange besteht aus zwei durch einen Kolben (1) zueinander verschiebbar gemachten Hauptteilen, dem Oberteil mit dem Kolbenbolzenlager und dem Unterteil mit dem Pleuellager. Die Zylinderkammern (3, 4) dieses Kolbens sind durch Ölkanäle (5, 5') mit Rückschlagventilen (6, 6') mit dem Schmierölkreislauf des Motors verbunden.
4. Die Längenverstellung der Pleuelstange erfolgt durch Veränderung der Ölmenge in diesen Zylinderkammern, was durch Öffnen derselben durch die Bewegung eines Bolzens (7) bewirkt wird, der durch einen veränderbar gemachten Schmieröldruck des Schmierölkreislaufs angesteuert wird.
5. Pleuelstangen der beschriebenen Bauart sind vorzugsweise für Ottomotoren geeignet.

### Zeichnungslegende

- 1: Kolben
- 2: Kolbenstange
- 3: Kammer oben
- 4: Kammer unten
- 5: Ölzulaufkanal 5'
- 6: Rückschlagventile 6'
- 7: Hohlbolzen
- 8: Seitliche Bohrungen (Austrittsstellen)
- 9: Kleiner Kolben
- 10: Zylinderkammer
- 11: Ölkanal
- 12: Feder
- 13: Bohrung
- 14: Zylinderkammer
- 15: Kolben
- 16: Teil
- 17: Unterteil
- 18: Oberteil
- 19: Pleuellager
- 20: Querbohrung (Ölablaufkanal)
- 21: Ringkammer obere
- 22: Ringkammer untere
- 23: Befestigungsschraube
- 24: Untere Lagerschale
- 25: Kolbenstange (von 15)
- 26: Querbohrung
- 27: Rückholfeder (für Kolben 15)
- 28: Ring
- 29: Trennfuge
- 30: Feststehendes Teil (von 17)
- 31: Kurbelzapfen
- 32: Kurbelwellenwange
- 33: Kurbelwelle

## Patentansprüche

1. Hydraulisch längenverstellbare Pleuelstange insbesondere für Otto- oder Dieselmotoren, die aus zwei zueinander durch mindestens einen Kolben (1) mit zugeordneter Zylinderkammer in deren Längsachse verschiebbar gemachten Hauptteilen besteht, dem Oberteil (18) mit dem Kolbenbolzenlager und dem Unterteil (17) mit dem Pleuellager (19), wobei im Zylinderraum dieses Kolbens (1) beidseitig mindestens je eine Kammer (3, 4) ausgebildet ist, **dadurch gekennzeichnet, dass** die Kammern (3, 4) durch wenigstens einen Ölzulaufkanal (5, 5') über die Kurbelwelle mit dem Schmierölkreislauf des Motors verbunden sind, oder teilweise durch Verbindung der Kammern (3, 4) untereinander, und die Kammern (3, 4) gegen das Rücklaufen von Öl in den Schmierölkreislauf abgesichert sind, vorzugsweise durch Rückschlagventile (6, 6'), wobei in der Pleuelstange wenigstens ein dem Kolben (1) zugeordneter Bolzen (7) gelagert ist, an dem wenigstens eine Öffnung (8) oder/und Freistellung als Austrittsstelle des Öls so ausgebildet und platziert ist, dass seine Bewegung in eine andere Position das Herausdrücken von Öl aus der jeweilig dadurch geöffneten Kammer (3, 4) ermöglicht, was auch durch wenigstens einen ihr zugeordneten Ölablaufkanal (20) erfolgen kann, wobei die Austrittsstellen (8) des Öls aus den Kammern (3, 4) so lagestimmt sind, dass die durch das Abströmen von Öl bedingte Bewegung des Oberteils (18) der Pleuelstange zu zunehmendem Überdecken und dann Verschließen der jeweiligen Austrittsstelle(n) (8) des Öls führt und dadurch das Abströmen von Öl wieder unterbrochen wird.

2. Pleuelstange nach Patentanspruch 1, **dadurch gekennzeichnet, dass** sich im Unterteil der Pleuelstange mindestens eine weitere Zylinderkammer (10) mit einem ihr zugeordneten Kolben (9) befindet, diese Zylinderkammer mit dem Schmierölkreislauf des Motors verbunden ist dessen veränderbarer Druck auf den Kolben (9) diesen bewegend einwirkt, wobei dieser Kolben (9) mit wenigstens dem Bolzen (7) ein Teil bildet, oder der Kolben (9) diesem Bolzen (7) insoweit zugeordnet ist, dass er seine Bewegung bewirkt und die Rückstellung des Kolbens (9) durch mindestens ein Federelement (12) erfolgt.

3. Pleuelstange nach Patentanspruch 1 oder 2, **dadurch gekennzeichnet, dass** sich im Bereich der Befestigungsschrauben (23) der unteren Lagerschale (24) des Pleuellagers eine Zylinderkammer (14) befindet, die mit mindestens einer Querbohrung (26) dem Schmierölkreislauf des Motors verbunden ist, dessen veränderbarer Druck auf einen Kolben (15) einwirkt, dessen Kolbenstange (25) direkt - oder über wenigstens ein dazwischen befindliches Teil (16) - mit einem in der Pleuelstange schwenkbar gelagerten und im Eingriff mit dem Bolzen (7) stehendem Teil (16) so verbunden ist, dass seine Schwenkbewegung bewirkt werden kann.

4. Pleuelstange nach einem der Ansprüche 1 bis 3, **dadurch gekennzeichnet, dass** die Bewegung des (oder der) Bolzen (7) durch veränderbar gemachten Schmieröldruck bewirkt wird, der auf ihn direkt oder durch eine dazwischen befindliche Mechanik einwirkt, oder nur mechanisch vom Kurbelgehäuse her angesteuert wird.

5. Pleuelstange nach einem der Ansprüche 1 bis 4, **dadurch gekennzeichnet, dass** der Verschiebeantrieb des Kolbens (9) ausschließlich öldruckgesteuert ist.

6. Pleuelstange nach einem der Ansprüche 1 bis 5, **dadurch gekennzeichnet, dass** der die Längenverstellung der Pleuelstange steuernde Bolzen (7) quer zur Längsachse der Pleuelstange eingebaut ist.

7. Pleuelstange nach Anspruch 6, **dadurch gekennzeichnet, dass** der Kolben (1) eine stiftartige Verlängerung mit Ölkanälen aufweist, die nach unten und durch den quer liegenden Bolzen (7) hindurchgeht.

8. Pleuelstange nach einem der Ansprüche 1 bis 7, **dadurch gekennzeichnet, dass** die mechanische Ansteuerung des Bolzens (7) durch eine höhenverstellbare Mechanik bewirkt wird, die durch eine teleskopartige Führung zwischen Stange und Hülse mit einem schwenkbaren Teil (16) verbunden ist, das die Bewegung auf den Bolzen (7) überträgt.

9. Pleuelstange nach einem der Ansprüche 1 bis 8, **dadurch gekennzeichnet, dass** der Bolzen (7) seitlich zur Längsachse des Kolbens (1) versetzt angeordnet ist.

## Claims

1. Hydraulically length-adjustable connecting rod in particular for Otto or diesel engines, which consists of two main parts made slidable on the longitudinal axis thereof relative to each other by at least one piston (1) with associated cylinder chamber, the upper part (18) with the small-end bearing and the lower part (17) with the connecting rod bearing (19), wherein in the cylinder chamber of this piston (1) on either side is formed at least one chamber (3, 4), **characterised in that** the chambers (3, 4) are connected by at least one oil supply channel (5, 5') via the crankshaft to the lubricating oil circuit of the engine, or partly connected to each other by connection of the chambers (3, 4), and the chambers (3, 4) are protected against the return of oil into the lubricating oil circuit, preferably by non-return valves (6, 6'), wherein in the connecting rod is mounted at least one bolt (7) which is associated with the piston (1) and in which at least one opening (8) and/or cut-away as an exit point for the oil is formed and placed in such a way that its movement into another position allows oil to be forced out of the chamber (3, 4) which is respectively opened as a result, which can also be effected through at least one oil discharge channel (20) associated with it, wherein the exit points (8) for the oil from the chambers (3, 4) are oriented in such a way that the movement of the upper part (18) of the connecting rod caused by the flowing away of oil leads to an increase in covering and then closing of the respective exit point(s) (8) for the oil and hence the flowing away of oil is interrupted again.

2. Connecting rod according to claim 1, **characterised in that** in the lower part of the connecting rod is located at least one additional cylinder chamber (10) with a piston (9) associated with it, this cylinder chamber is connected to the lubricating oil circuit of the engine of which the variable pressure acts on the piston (9), moving it, wherein this piston (9) with at least the bolt (7) forms one part, or the piston (9) is associated with this bolt (7) to such an extent that it causes its movement and return of the piston (9) is effected by at least one spring element (12).

3. Connecting rod according to claim 1 or 2, **characterised in that** in the region of the fastening screws (23) for the lower bearing shell (24) of the connecting rod bearing is located a cylinder chamber (14) which is connected by at least one transverse bore (26) to the lubricating oil circuit of the engine, the variable pressure of which acts on a piston (15) of which the piston rod (25) is connected directly - or via at least one part (16) located therebetween - to a part (16) which is mounted pivotably in the connecting rod and engaged with the bolt (7), in such a way that its pivot movement can be effected.

4. Connecting rod according to one of claims 1 to 3, **characterised in that** the movement of the bolt or bolts (7) is effected by lubricating oil pressure which is made variable and which acts on it directly or through a mechanism located therebetween, or is controlled mechanically only from the crank housing.

5. Connecting rod according to one of claims 1 to 4, **characterised in that** the sliding drive of the piston (9) is exclusively oil pressure-controlled.

6. Connecting rod according to one of claims 1 to 5, **characterised in that** the bolt (7) which controls the length adjustment of the connecting rod is fitted transversely to the longitudinal axis of the connecting rod.

7. Connecting rod according to claim 6, **characterised in that** the piston (1) has a pin-like extension with oil channels, which passes downwardly and through the transverse bolt (7).

8. Connecting rod according to one of claims 1 to 7, **characterised in that** mechanical control of the bolt (7) is effected by a height-adjustable mechanism which is connected by a telescopic guide between rod and sleeve to a pivotable part (16) which transmits the movement to the bolt (7).

9. Connecting rod according to one of claims 1 to 8, **characterised in that** the bolt (7) is laterally offset from the longitudinal axis of the piston (1).

## Revendications

1. Bielle réglable en longueur hydrauliquement, en particulier pour moteurs à essence ou moteurs diesel, qui se compose de deux parties principales rendues mobiles l'une par rapport à l'autre sur leur axe longitudinal grâce à un piston (1) avec une chambre cylindrique associée : la partie supérieure (18) avec le coussinet d'axe de pied de bielle, et la partie inférieure (17) avec le coussinet de tête de bielle (19), au moins une chambre (3, 4) étant formée dans l'espace cylindrique de ce piston (1), de chaque côté, **caractérisée en ce que** les chambres (3, 4) sont reliées par au moins un conduit d'amenée d'huile (5, 5') par l'intermédiaire du vilebrequin au circuit de lubrifiant du moteur, ou en partie grâce à une liaison des chambres (3, 4) entre elles, et les chambres (3, 4) sont protégées d'un reflux d'huile dans le circuit d'huile lubrifiante, de préférence par des clapets antiretour (6, 6'), au moins un axe (7) associé au piston (1) étant monté dans la bielle, sur lequel au moins une ouverture (8) ou/et un dégagement est conçu et placé comme point de sortie de l'huile de telle sorte que son déplacement jusqu'à une autre position permette l'expulsion d'huile hors de la chambre (3, 4) ainsi ouverte, ce qui peut aussi se faire par au moins un conduit d'écoulement d'huile (20) associé à la chambre, les points de sortie (8) de l'huile hors des chambres (3, 4) étant positionnés de telle sorte que le déplacement, dû à l'écoulement de l'huile, de la partie supérieure (18) de la bielle entraîne un recouvrement croissant, puis la fermeture des points de sortie (8) respectifs de l'huile et que l'écoulement de l'huile est ainsi à nouveau interrompu.

2. Bielle selon la revendication 1, **caractérisée en ce qu'**au moins une autre chambre cylindrique (10) avec un piston (9) qui lui est associé se trouve dans la partie inférieure de la bielle, cette chambre cylindrique est reliée au circuit d'huile lubrifiante du moteur, dont la pression variable agit sur le piston (9) en déplaçant celui-ci, ce piston (9) formant une seule pièce avec au moins l'axe (7), ou le piston (9) étant associé à cet axe (7) de sorte qu'il provoque son déplacement et que le rappel du piston (9) se fait grâce à au moins un élément à ressort (12).

3. Bielle selon la revendication 1 ou 2, **caractérisée en ce que** dans la zone des vis de fixation (23) de la coquille inférieure (24) du coussinet se trouve une chambre cylindrique (14) qui est reliée par au moins un perçage transversal (26) au circuit d'huile lubrifiante du moteur, dont la pression variable agit sur un piston (15) dont la tige de piston (25) est reliée directement - ou par l'intermédiaire d'au moins un élément (16) qui se trouve entre les deux - à un élément (16) monté pivotant dans la bielle et en prise avec l'axe (7) de telle sorte que son mouvement pivotant peut être provoqué.

4. Bielle selon l'une des revendications 1 à 3, **caractérisée en ce que** le déplacement de l'axe (ou des axes) (7) est provoqué par une pression d'huile lubrifiante rendue variable, qui agit directement sur lui directement ou grâce à un mécanisme qui se trouve entre les deux, ou qui est seulement commandé mécaniquement à partir du carter.

5. Bielle selon l'une des revendications 1 à 4, **caractérisée en ce que** l'entraînement du piston (9) est uniquement commandé par pression d'huile.

6. Bielle selon l'une des revendications 1 à 5, **caractérisée en ce que** l'axe (7) commandant le réglage en longueur de la bielle est monté transversalement par rapport à l'axe longitudinal de la bielle.

7. Bielle selon la revendication 6, **caractérisée en ce que** le piston (1) présente un prolongement en forme de tige avec des conduits d'huile qui s'étendent vers le bas et traversent l'axe transversal (7).

8. Bielle selon l'une des revendications 1 à 7, **caractérisée en ce que** la commande mécanique de l'axe (7) est provoquée par un mécanisme réglable en hauteur qui est relié par un guidage télescopique entre tige et manchon à un élément pivotant (16) qui transmet le déplacement à l'axe (7).

9. Bielle selon l'une des revendications 1 à 8, **caractérisée en ce que** l'axe (7) est décalé latéralement par rapport à l'axe longitudinal du piston (1).
